# EUROPÄISCHE PATENTANMELDUNG

(11) **EP 2 999 098 A1**
(43) Veröffentlichungstag der Anmeldung: **23.03.2016**
(21) Anmeldenummer: 14185256.6
(22) Anmeldetag: 18.09.2014
(51) Int. Cl.: H02K 9/10, H02K 9/18

(54) **Elektrodynamische Maschine mit Kühlströmungskanal**

(71) Anmelder: Siemens Aktiengesellschaft, 80333 München (DE)
(72) Erfinder: Kowalski, Carina, 45478 Mülheim an der Ruhr (DE); Kowalski, Matthias, 45478 Mülheim an der Ruhr (DE)

(57) **Zusammenfassung**

Die Erfindung betrifft einen Turbogenerator (1) in Reverse-Flow-Bauart, wobei der Diffusor (16) derart ausgebildet ist, dass an einer inneren Kühlströmungskanalwand (17) Mittel (26) angeordnet sind, die zu einem Nichtabreißen der Strömung des Kühlungsmediums zur Folge hat, was zu einer besseren und gleichmäßigeren Anströmung an einen Kühler (13) bewirkt.

## Beschreibung

Die Erfindung betrifft eine elektrodynamische Maschine umfassend eine Rotorwicklung und eine Statorwicklung sowie einen Kühlströmungskanal, der zum Durchströmen von Kühlungsmedium ausgebildet ist und durch Kanalwände begrenzt ist.

Elektrodynamische Maschinen wie beispielsweise Turbogeneratoren umfassen in der Regel einen drehbar gelagerten Rotor, der eine Rotorwicklung umfasst sowie einen um den Rotor angeordneten Stator, der eine Statorwicklung umfasst. Im Betrieb strömt ein vergleichsweise hoher elektrischer Strom durch die Rotorwicklung als auch durch die Statorwicklung. Die Rotorwicklung ist derart geformt, dass ein Magnetfeld entsteht, wobei durch die rotierende Bewegung des Rotors eine Spannung in der Statorwicklung induziert wird. Die somit entstandene elektrische Energie wird dann über geeignete Versorgungs- und Übertragungsnetze an elektrische Verbraucher zugeführt.

In modernen Turbogeneratoren sind die Ströme in der Rotor- und/oder Statorwicklung derart groß, dass die Gefahr einer Überhitzung entsteht. Daher müssen Turbogeneratoren gekühlt werden. Dies kann durch Durchströmung mit Luft, Gas wie z. B. Wasserstoffgas oder Wasser erfolgen.

Es sind sogenannte Reverse-Flow-Turbogeneratoren bekannt, die ein Gebläse umfassen, die das warme Gas aus dem Turbogeneratorinneren saugen und es in einen Kühler drücken, von wo es erneut durch das Turbogeneratoreninnere strömt.

Zwischen dem Gebläse und dem Kühler ist ein Diffusor angeordnet, der dazu ausgebildet ist, die Strömung verlustarm aufzuweiten, um eine gleichmäßige Anströmung des Kühlers zu ermöglichen.

Allerdings ist bei modernen Turbogeneratoren aufgrund des geringen Bauraums der Krümmungsradius des Diffusors nicht optimal ausgelegt. Der Krümmungsradius ist vielmehr zu klein ausgewählt, so dass ein Strömungsabriss die Folge ist. Somit wird eine unerwünschte erhöhte mechanische Belastung des Kühlers erreicht, was zu einer nicht optimalen Nutzung führt.

Die Erfindung hat es sich zur Aufgabe gemacht, den Diffusor dahingehend zu verändern, dass eine optimale Anströmung eines Kühlers möglich ist.

Gelöst wird diese Aufgabe durch eine elektrodynamische Maschine umfassend eine Rotorwicklung und eine Statorwicklung sowie einen Kühlströmungskanal, der zum Durchströmen von Kühlungsmedium ausgebildet und durch Kanalwände begrenzt ist, wobei die Kanalwände Mittel zum Erhöhen von Turbulenzen in der Strömung des Kühlungsmediums aufweisen. Durch die Erfindung wird die turbulente kinetische Energie im Grenzschichtbereich an der Kanalwand erhöht.

Somit wird erfindungsgemäß vorgeschlagen, Mittel auf die Oberfläche der Kanalfläche anzuordnen, um Turbulenzen zu erzeugen. Diese Turbulenzen verzögern ein Abreißen der Strömung. Somit folgt die Strömung dem Verlauf der Kanalwände. Die Folge ist, dass ein am Ende des Diffusors angeordneter Kühler optimal angeströmt wird. Vorteilhafte Weiterbildungen sind in den Unteransprüchen angegeben. In einer ersten vorteilhaften Weiterbildung ist der Kühlströmungskanal als ein Diffusor ausgebildet. Ein Diffusor ist ein Bauteil, das Gas bzw. Flüssigkeitsströmungen verlangsamt und den Gas- bzw. Flüssigkeitsdruck erhöht. Somit ist ein Diffusor im Prinzip die Umkehrung einer Düse. Mit einem Diffusor erfolgt eine Rückgewinnung von kinetischer Energie in Druckenergie. Erreicht wird dies durch eine stetige oder unstetige Erweiterung des Strömungsquerschnitts. Erfindungsgemäß wird an die Kanalwand des Diffusors ein Mittel zum Erhöhen von Turbulenzen in der Strömung angeordnet.

In einer weiteren vorteilhaften Weiterbildung weist der Diffusor eine innere Kühlströmungskanalwand mit einem ersten Krümmungsradius und eine äußere Kühlströmungskanalwand mit einem zweiten Krümmungsradius auf, wobei der erste Krümmungsradius kleiner ist als der zweite Krümmungsradius, wobei das Mittel an der inneren Kühlströmungskanalwand angeordnet ist. Diese innere Kühlströmungskanalwand kann beispielsweise die Innenseite der Diffusoraußenwand sein.

Der Rotor der elektrodynamischen Maschine ist um eine Rotationsachse drehbar ausgebildet. Der Stator ist ebenso um die Rotationsachse im Wesentlichen rotationssymmetrisch ausgebildet. Das in der elektrodynamischen Maschine befindliche Kühlungsmedium wird über das Gebläse zunächst im Wesentlichen in axialer Richtung, d. h. parallel zur Rotationsachse, geführt. Das Gebläse, das für diese Bewegung des Strömungsmediums verantwortlich ist, ist in der Regel stirnseitig angeordnet, wobei der Kühler, der zum Kühlen des Kühlungsmediums ausgebildet ist, aus Platzgründen zumeist 90 Grad zur Strömungsrichtung des Strömungsmediums stirnseitig in der elektrodynamischen Maschine angeordnet ist. Somit muss der Diffusor die Strömung zum einen umlenken und zum anderen abbremsen und die kinetische Energie in Druckenergie umwandeln. Somit weist der Diffusor in der zunächst axialen Strömungsrichtung gesehen eine äußere Kühlströmungskanalwand auf, die näher zur Rotationsachse angeordnet ist als die innere Kühlströmungskanalwand. Aus Sicht der Strömung ist der Radius der inneren Kühlströmungskanalwand, wie beispielsweise die Innenseite der Diffusoraußenwand, kleiner als der Radius der äußeren Kühlströmungskanalwand, wie beispielsweise die Innenseite der Diffusoraußenwand. Ein Abriss der Kühlströmung erfolgt somit an der inneren Kühlströmungskanalwand. Durch ein Anbringen eines Mittels vor dem zu erwarteten Ablösen der Strömung kann ein Abreißen der Strömung verhindert werden, wenn das Mittel zum Erhöhen von Turbulenzen in der Strömung des Kühlmediums ausgebildet ist.

Vorteilhafterweise ist an dem Diffusor, der ein Diffusorende aufweist ein Kühler am Diffusorende angeordnet. Durch das direkte bzw. unmittelbare Anordnen eines Kühlers an den Diffusor sind die Strömungsverluste möglichst gering. So kann die Kühlwirkung des Kühlers optimal ausgenutzt werden.

In einer vorteilhaften Weiterbildung ist das Mittel als ein Stolperdraht ausgebildet. Der Stolperdraht ist im Wesentlichen eine Erhebung an der inneren Kühlströmungskanalwand, die einen Strömungswiderstand für die Strömung des Kühlungsmediums darstellt. Der Stolperdraht ist hierbei derart angeordnet, dass das Strömungsmedium, das mit einer Strömungsrichtung angeströmt kommt, das im Wesentlichen parallel zur Rotationsachse ist, mehr oder weniger gleichzeitig auch den Stolperdraht antrifft. Das bedeutet, dass der Stolperdraht im Wesentlichen 90 Grad zur Strömungsrichtung ausgerichtet ist. Wenn der Diffusor rotationssymmetrisch zur Rotationsachse ausgebildet ist, ist der Stolperdraht in Rotationsachsenrichtung gesehen ein Ring, der an der inneren Kühlströmungskanalwand angeordnet ist. Dieser Ring steht senkrecht zur Rotationsachse und führt dazu, dass das Kühlungsmedium mit der gleichen Geschwindigkeitskomponente auf den Stolperdraht strömt.

In einer vorteilhaften Weiterbildung ist das Mittel als eine Vertiefung ausgebildet, ähnlich wie die Oberfläche eines Golfballs, kann die innere Kühlströmungskanalwand als auch die äußere Kühlströmungskanalwand mit einer Oberfläche versehen sein, die der eines Golfballs gleicht. Das bedeutet, dass mehrere Vertiefungen auf der Oberfläche der inneren Kühlströmungskanalwand, wie beispielsweise die Innenseite der Diffusoraußenwand, und/oder der äußeren Kühlströmungskanalwand, wie beispielsweise die der Strömung zugewandten Seite der Diffusorinnenwand, angeordnet sind. Diese Vertiefungen sind in etwa kreisförmige Materialaussparungen. Andere Geometrien sind allerdings denkbar, so kann z. B. die Vertiefung als eine eckig ausgebildete Vertiefung sein. Die Vertiefung kann eine viereckige Materialaussparung sein. Diese viereckige Materialaussparung kann beispielsweise durch einen Stempel erfolgen, der in der Diffusorwand leicht herstellbar ist.

In einer weiteren vorteilhaften Weiterbildung kann die innere Kühlströmungskanalwand als auch die äußere Kühlströmungskanalwand mit mehreren Erhebungen ausgebildet sein. Im Wesentlichen würde dann eine solch ausgebildete Oberfläche der Haut eines Haifisches ähneln. Das Modell der Haifischhaut weist Ripplets auf, was auch als kleine Rippen bezeichnet werden kann. Solch eine Oberflächengeometrie führt zu einer Verminderung des Reibungswiderstandes auf turbulent überströmte Oberflächen. Es handelt sich bei diesen Oberflächengeometrien um feine Rippen, die eine sehr scharfe Rippenspitze haben. Diese Rippen werden parallel zur Strömungsrichtung angeordnet, wobei die Abmessungen dieser feinen, parallel zur Strömungsrichtung angeordneten Rillen von der Geschwindigkeit sowie der Zähigkeit bzw. Viskosität des Kühlungsmediums abhängig ist. Diese Rillen bzw. Rippen können materialtechnisch bzw. materialeinheitlich mit der inneren Kühlströmungskanalwand ausgebildet sein. In einer alternativen Ausführungsform kann eine Rillenfolie verwendet werden.

In einer weiteren vorteilhaften Weiterbildung ist der Kühler und der Diffusor stirnseitig in der elektrodynamischen Maschine angeordnet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Ausführungsbeispiele der Erfindung werden nachfolgend anhand der Zeichnungen beschrieben. Diese soll die Ausführungsbeispiele nicht maßgeblich darstellen, vielmehr ist die Zeichnung wohl zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigen
- Figur 1: eine schematische Querschnittsansicht eines Turbogenerators;
- Figur 2: eine schematische Querschnittsansicht eines Teils des Diffusors;
- Figur 3: eine schematische Querschnittsansicht eines Teils des Diffusors mit der erfindungsgemäßen Ausführung.

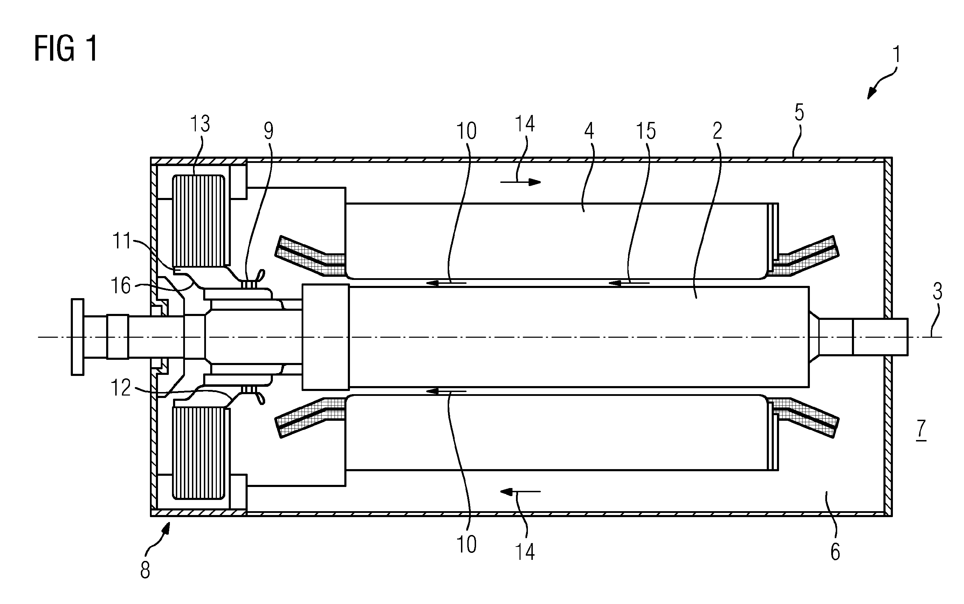

Durch die erfindungsgemäße Ausführungsform mit den Mitteln zum Erhöhen von Turbulenzen wird die mechanische Belastung des Kühlers reduziert, was die Wahrscheinlichkeit von Kühlerschäden reduziert und führt zudem zu einer besseren Ausnutzbarkeit des Kühler. Die Figur 1 zeigt einen Turbogenerator 1 als Ausführungsform einer elektrodynamischen Maschine. Der Turbogenerator 1 umfasst im Wesentlichen einen Rotor 2 mit einer nicht näher dargestellten Rotorwicklung. Der Rotor 2 ist um eine Rotationsachse 3 drehbar gelagert. Um den Rotor 2 ist ein Stator 4 mit einer nicht näher dargestellten Statorwicklung angeordnet. Um den Stator 4 ist schließlich ein Turbogeneratorgehäuse 5 angeordnet, welches das Turbogeneratorinnengehäuse 6 gegenüber der Außenumgebung 7 abdichtet. Somit kann ein im Turbogeneratorinneren 6 befindliches Kühlungsmedium wie beispielsweise Luft oder ein Gas wie z. B. Wasserstoff nicht in den Außenraum 7 gelangen. Im Betrieb strömt ein vergleichsweise hoher Strom durch die Rotorwicklung als auch durch die Statorwicklung. Somit müssen sowohl die Rotorwicklung als auch die Statorwicklung geeignet gekühlt werden. Dies erfolgt durch den Rotor 2 bzw. im Stator 4 angeordnete Kühlbohrungen, durch die ein geeignetes Kühlungsmedium strömt. Bekannt sind Luft, Gas wie Wasserstoff oder Wasser als Kühlungsmedium.

Der Rotor 2 rotiert mit einer Frequenz von beispielsweise 50Hz. Es sind auch andere Frequenzen bekannt.

Stirnseitig 8 ist ein Gebläse 9 angeordnet, das ein im Turbogeneratorinneren 6 befindliches Kühlungsmedium saugt. Dies ist durch die Pfeile 10 dargestellt, die sich von rechts nach links in der Zeichenebene zum Gebläse 9 zeigen. Aus Gründen der Übersichtlichkeit sind lediglich zwei Pfeile mit dem Bezugszeichen 10 versehen. Der Turbogenerator 1 ist in einer sogenannten Reverse-Flow-Bauart ausgebildet. Das bedeutet, dass die Kühlmediumströmungsrichtung von innen nach außen geht. Das bedeutet, dass das Kühlmedium zur Stirnseite des Turbogenerators 1 über das Gebläse 9 bewegt wird. Andere Bauformen sind bekannt, bei denen über ein Gebläse oder einen Ventilator das Kühlungsmedium stirnseitig in dem Turbogeneratorinneren 6 bewegt wird.

Der Turbogenerator 1 weist einen Kühlungsströmungskanal 11 auf, der zum Durchströmen von Kühlungsmedium ausgebildet ist und durch Kanalwände 12 begrenzt ist. Das Kühlungsmedium strömt zunächst parallel zur Rotationsachse 3 zum Gebläse 9 hin und wird dann im Kühlströmungskanal 11 zu einem Kühler 13 umgelenkt. Im Kühler 13 wird das erwärmte Kühlungsmedium wieder abgekühlt und durch die Gebläsewirkung in das Turbogeneratorinnere 6 geströmt, was durch die Strömungspfeile 14 in der Figur 1 dargestellt ist. Aus Platzgründen ist der Kühler 13 im Wesentlichen 90 Grad zur Hauptströmungsrichtung 15 des Kühlungsmediums angeordnet, wobei die Hauptströmungsrichtung 15 im Wesentlichen parallel zur Rotationsachse 3 ausgerichtet ist. Die Kanalwand 12 weist Mittel 26 zum Erhöhen von Turbulenzen in der Strömung des Mittels auf. Im Wesentlichen ist der Kühlströmungskanal 11 als ein Diffusor 16 ausgebildet.

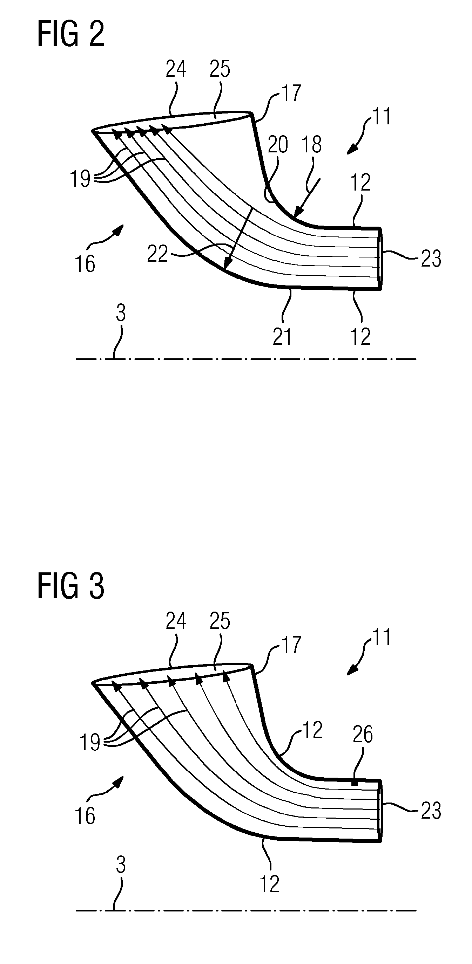

Die Figuren 2 und 3 zeigen eine abschnittsweise Darstellung des Diffusors 16, wobei die Figur 2 den Diffusor 16 ohne erfindungsgemäße Mittel 26 und die Figur 3 mit erfindungsgemäßem Mittel darstellt. Der Diffusor 16 ist trompetenartig um die Rotationsachse 3 rotationssymmetrisch ausgebildet und weist eine innere Kühlströmungskanalwand 17 auf. Diese innere Kühlströmungskanalwand 17 ist durch einen ersten Krümmungsradius 18 charakterisiert. Das bedeutet, dass die Strömung, die in der Figur 2 und 3 durch Strömungslinien 19 dargestellt sind, eine Kurve beschreibt, die aus der Strömungsrichtung gesehen eine Kurve nach rechts beschreibt. Durch einen zu kleinen ersten Krümmungsradius 18 kann es an einer Abrissstelle 20 zu einem Strömungsabriss kommen. Der Diffusor 16 weist des Weiteren eine äußere Kühlströmungskanalwand 21 auf, die durch einen zweiten Krümmungsradius 22 charakterisiert ist. Wie in Figur 2 deutlich zu sehen, ist der Diffusor dadurch charakterisiert, dass der erste Krümmungsradius 18 kleiner ist, als der zweite Krümmungsradius 22. Der Diffusor weist einen ersten Strömungsquerschnitt 23 auf, der am Eingang des Diffusors 16 angeordnet ist. Am Ausgang 25 des Diffusors 16 ist der zweite Strömungsquerschnitt 24, wobei der zweite Strömungsquerschnitt 24, wie es bei einem Diffusor 16 so sein muss, größer ist als der erste Strömungsquerschnitt 23. Am Ausgang 25 des Diffusors 16 ist unmittelbar der Kühler 13 angeordnet. Wie in Figur 2 zu sehen, ist die Strömung am Ausgang 25 des Diffusors 16 konzentriert auf die äußere Kühlströmungskanalwand 21. Dies gilt es erfindungsgemäß zu vermeiden, was in der Figur 3 dargestellt ist. Der Übersichtlichkeit wegen sind in der Figur 3 die geometrischen Merkmale des Diffusors 16 mit den Bezugszeichen nicht wiederholt. Der Diffusor 16 in Figur 3 ist durch seine äußeren geometrischen Merkmale identisch zu der Figur 2. Der Unterschied zu der Figur 2 besteht darin, dass die innere Kühlströmungskanalwand 17 ein Mittel 26 zum Erhöhen von Turbulenzen in der Strömung des Kühlungsmediums aufweist. Das Mittel 26 ist in dem in Figur 3 gewählten Beispiel als ein Stolperdraht ausgeführt. Das bedeutet, dass das Mittel 26 eine leichte Erhebung gegenüber der ersten Kühlströmungskanalwand 17 zeigt, was einen Einfluss auf die Strömung des Kühlmediums nach sich zieht. In Figur 3 sind die Strömungslinien 19 dargestellt, die aufgrund des Einbringens des Mittels 26 bereits eine andere Charakteristik zeigen als in Figur 2. Deutlich ist zu sehen, dass die Strömungslinien 19 am Ausgang 25 eine Vergleichmäßigung aufzeigen. Das bedeutet, dass der Kühler 13, der am Ausgang 25 angeordnet ist, gleichmäßiger angeströmt wird. Dadurch wird eine mechanische Belastung des Kühlers 13 reduziert. Das führt zu einer besseren Ausnutzung des Kühlers 13. Der Stolperdraht ist um die gesamte Kühlströmungskanalwand 17 angeordnet, so dass im Wesentlichen ein Ring, der in der Figur 3 nicht darstellbar ist, gebildet ist. Der Ring ist rotationssymmetrisch um die Rotationsachse 3 angeordnet.

In alternativen Ausführungsformen kann an der Stelle des als Stolperdraht ausgebildeten Mittels 26 Vertiefungen angeordnet werden. Dies ist in der Figur 3 nicht dargestellt. Diese Vertiefungen können wie die Oberfläche eines Golfballs ausgebildet sein. Das bedeutet, dass die Vertiefungen in regelmäßigten Abständen auf der inneren Kühlströmungskanalwand 17 angeordnet sind. Die Größe und Verteilung der Vertiefungen können entsprechend den Strömungsverhältnissen angepasst werden. Jedenfalls führt das Mittel 26 zu einer Turbulenz an der inneren Kühlströmungskanalwand 17.

In einer weiteren alternativen Ausführungsform kann das Mittel 26 mit mehreren Erhebungen ausgebildet sein. Das bedeutet, dass an der Stelle des Mittels 26 eine sogenannte Haifischhaut ausgebildet wird. Eine solche Haifischhaut zeichnet sich durch spitze Rippen aus, wobei die Rippen in länglicher Richtung in Strömungsrichtung angeordnet sind. Auf eine detaillierte Beschreibung der Haifischhaut wird hier nicht eingegangen. Die Haifischhaut ist charakterisiert durch mehrere parallel zueinander angeordnete Rippen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrodynamische Maschine
umfassend eine Rotorwicklung und eine Statorwicklung sowie einen Kühlströmungskanal (11), der zum Durchströmen von Kühlungsmedium ausgebildet ist und durch Kanalwände (12) begrenzt ist,
**dadurch gekennzeichnet, dass**
die Kanalwände (12) Mittel (26) zum Erhöhen von Turbulenzen in der Strömung des Kühlungsmediums aufweisen.

2. Elektrodynamische Maschine nach Anspruch 1,
wobei der Kühlströmungskanal (11) als ein Diffusor (16) ausgebildet ist.

3. Elektrodynamische Maschine nach Anspruch 2,
wobei der Diffusor (16) eine innere Kühlströmungskanalwand (17) mit einem ersten Krümmungsradius (18) und eine äußere Kühlströmungskanalwand (21) mit einem zweiten Krümmungsradius (22) aufweist,
wobei der erste Krümmungsradius (18) kleiner ist als der zweite Krümmungsradius (22),
wobei das Mittel (26) an der inneren Kühlströmungskanalwand (17) angeordnet ist.

4. Elektrodynamische Maschine nach Anspruch 2 oder 3,
wobei der Diffusor (16) ein Diffusorende aufweist und an das Diffusorende ein Kühler (13) angeordnet ist.

5. Elektrodynamische Maschine nach einem der vorhergehenden Ansprüche,
wobei das Mittel (26) als ein Stolperdraht ausgebildet ist.

6. Elektrodynamische Maschine nach einem der Ansprüche 1 bis 4,
wobei das Mittel (26) eine Vertiefung ist.

7. Elektrodynamische Maschine nach einem der Ansprüche 1 bis 4,
wobei das Mittel (26) mehrere Erhebungen aufweist.

8. Elektrodynamische Maschine nach einem der Ansprüche 2 bis 7,
wobei der Kühler (13) und der Diffusor (16) stirnseitig angeordnet sind.
